(19) Europäisches Patentamt
European Patent Office
Office européen des brevets

(11) Publication number: **0 160 538 B1**

(12) **EUROPEAN PATENT SPECIFICATION**

(45) Date of publication of patent specification: **27.02.91** (51) Int. Cl.5: **G11B 23/033**

(21) Application number: **85302960.1**

(22) Date of filing: **26.04.85**

(54) **Flexible magnetic disc cassettes and methods of making such cassettes.**

(30) Priority: **28.04.84 JP 87183/84**
**22.05.84 JP 74592/84**

(43) Date of publication of application:
**06.11.85 Bulletin 85/45**

(45) Publication of the grant of the patent:
**27.02.91 Bulletin 91/09**

(84) Designated Contracting States:
**AT DE FR GB NL**

(56) References cited:
**FR-A- 2 529 701**
**GB-A- 2 081 959**
**GB-A- 2 110 462**
**GB-A- 2 143 072**

(73) Proprietor: **SONY CORPORATION**
**7-35 Kitashinagawa 6-Chome Shinagawa-ku**
**Tokyo 141(JP)**

(72) Inventor: **Sugawara, Kokichi c/o Patent Division**
**Sony Corporation 7-35 Kitashinagawa-6**
**Shinagawa-ku Tokyo(JP)**
Inventor: **Matsuzaka, Takayoshi c/o Patent Division**
**Sony Corporation 7-35 Kitashinagawa-6**
**Shinagawa-ku Tokyo(JP)**

(74) Representative: **Thomas, Christopher Hugo et al**
**D Young & Co 10 Staple Inn**
**London WC1V 7RD(GB)**

**EP 0 160 538 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to flexible magnetic disc cassettes and methods of making such cassettes. The cassettes comprise a flexible magnetic disc enclosed in a hard casing, and the invention is more particularly, but not exclusively, concerned with a shutter for opening or closing an opening in the casing for insertion of a recording and/or reproducing head.

A magnetic disc cassette is known comprising a flexible magnetic disc having a diameter of, for example, 3.5 inches (approximately 8.9 cm) enclosed in a hard casing. This cassette is used for recording and/or reproduction of digital (or analog) data. A shutter for protection of the magnetic disc is slidably attached to the casing so as to be freely opened or closed. In practice, the shutter is open only in the operating state, and the magnetic disc is then exposed in an elongated opening formed in the casing for insertion of the head. In the non-operating state, the shutter and therefore the opening are closed. Since the opening is closed in this way, entry of foreign substances such as dust into the casing is prevented, so protecting the magnetic disc.

Hitherto, the shutter, which is of U-shaped cross-section, has been made of metal such as stainless steel. The shutter is formed with an elongated head access hole having substantially the same shape as the opening in the casing, and the shutter is slidably attached to the casing. It is necessary to attach the shutter to the casing such that it can be slid smoothly, but cannot easily be detached from the casing. In addition, it is also necessary for the shutter to fit closely to the outer surfaces of the casing to prevent entry of dust. Therefore, it is required that the dimensions of the opening portion of the shutter which sandwich the casing, and the position of a guide projection in the shutter are strictly determined so as to correspond to a standardized thickness of the cassette casing.

To make the known shutter, a flat plate of stainless steel is subjected to processes such as punching, bending and deburring. However, since the flat stainless plate has been rolled, a stress still remains and it is difficult to perform the necessary work with high precision and without subsequent deformation.

Moreover, when the shutter is attached to the casing or when the shutter is slid against the casing, the casing may be scraped by the guide projection and the resulting dust may enter the casing. Also, it is difficult to colour or to print on the metal shutter.

Our UK patent specification GB-A-2 081 959 discloses a magnetic disc cassette having the features of the preamble of claim 1.

According to the present invention there is provided a magnetic disc cassette comprising:
a magnetic disc;
a casing housing said magnetic disc; and
a U-shaped, synthetic resin shutter which is slidably provided on said casing and can be set to either an operating position or a non-operating position;
wherein said shutter comprises an upper plate, a lower plate, a side plate which couples said upper and lower plates, and an opening formed in at least one of said upper and lower plates for insertion of a head; characterised in that:
said upper plate, said lower plate and said side plate, and including said opening, of the shutter are integrally moulded to have the U-shaped cross-section and thereby to sandwich said casing; and when said shutter is removed from said casing the free ends of said upper and lower plates closely approach or abut each other.

According to the present invention there is also provided a method of moulding a shutter for such a magnetic disc cassette.

The invention will now be described by way of example with reference to the accompanying drawings, throughout which like parts are referred to by like references, and in which:

Figures 1A and 1B are a top view and a bottom view of one embodiment of flexible magnetic disc cassette according to the present invention;

Figures 2A to 2C are a front view, a bottom view and a side elevational view of a shutter of the disc cassette;

Figure 3 is a schematic cross-sectional view of the shutter;

Figures 4A and 4B are partially enlarged views of the shutter;

Figure 5 is a cross-sectional view used in explaining loading of the disc cassette into a disc recorder;

Figures 6A and 6B are a front view and a side elevational view of one example of metal moulds used to mould the shutter;

Figures 7 to 9 are cross-sectional views of the metal moulds;

Figures 10 and 11 are cross-sectional views for explaining use of the metal moulds to form the shutter;

Figures 12A and 12B are a front view and a side elevational view of another example of metal moulds used to mould the shutter;

Figures 13 to 15 are cross-sectional views of another example of metal moulds used to mould the shutter;

Figures 16 to 18 are cross-sectional views for use in explaining another example of metal moulds used to mould the shutter; and

Figures 19 to 21 are cross-sectional views of still another example of the metal moulds used to mould the shutter.

Figures 1A and 1B are a top view and a bottom view of a magnetic disc cassette forming one embodiment of the invention. The cassette comprises an upper shell 1 and a lower shell 2 which are injection-moulded from, for example, an ABS resin containing an antistatic agent. Liners of unwoven fabric such as rayon are adhered to the inner surfaces of the upper and lower shells 1 and 2 by heat sealing or ultrasonic sealing in order to prevent drop-out of signals from the magnetic disc during reproduction, as well as to prevent abrasion and generation of static electricity on the magnetic disc. The outer peripheries of the upper and lower shells 1 and 2 are integrally joined together by ultrasonic welding.

A magnetic disc 3 is enclosed in the casing so formed. The magnetic disc 3 is a thin and flexible disc-shaped base film of a high polymeric material with a magnetic layer uniformly formed at least on the bottom surface of the base film. A ring-shaped centre plate 4 is fixed in a circular hole formed at the centre of the magnetic disc 3. A motor shaft insertion hole 5 of substantially square shape is formed at the centre of the centre plate 4. A rectangular position regulating pin insertion hole 6 is formed at a position displaced from the insertion hole 5 by a predetermined distance. A circular opening 7 is formed at the centre of the lower shell 2, and the centre plate 4 is slightly loosely arranged in the opening 7. Elongated holes 8 and 9 are formed in the upper and lower shells 1 and 2, and the magnetic disc 3 is exposed through the holes 8 and 9.

Recesses 10 and 11 are formed in the outer surfaces of the upper and lower shells 1 and 2 including the portions where the longated holes 8 and 9 are formed. A shutter 12 having a U-shaped cross-section as shown in Figures 2A to 2C is slidably attached in the recesses 10 and 11. A guide groove 13 is formed along the side peripheral portion of the outer surface of the lower shell 2. A projection which protrudes inwardly from the shutter 12 is guided along the guide groove 13. In Figures 1A and 1B, the shutter 12 can be slid between the operating state as indicated by solid lines or the non-operating state as indicated by alternate long and two short dashes lines. In the operating state, the positions of the elongated head access hole 9, the elongated hole 8 for insertion of a head pad and the elongated head access holes 14 and 15 formed in the shutter 12 coincides, so that the magnetic disc 3 is exposed. On the conrary, in the non-operating state, the elongated holes 8 and 9 are closed and the magnetic disc 3 is covered by the shutter 12. The magnetic disc 3 is thus protected, and entry of dust is prevented by use of the shutter 12.

An erroneous erasure prevention lug 16 is arranged at one corner of the lower shell 2. Information recorded on the magnetic disc 3 is protected if the lug 16 is removed. A pair of positioning holes 17 and 18 for positioning the magnetic disc cassette in a disc recorder are formed at two corners of the lower shell 2. The hole 17 is an elongated hole, thereby permitting a slight error in the position of the hole 17. The other two corners of the lower shell 8 at which the positioning holes 17 and 18 are not formed serve as reference surfaces. Thus, the magnetic disc cassette is supported at the reference position with reference to four points at those corners. In this state, the magnetic disc 3 is rotated by a motor to record or reproduce digital or analog signals.

Figures 2A to 2C are a front view, a bottom view and a side elevational view of the shutter 12. An upper plate 21, a side plate 23 and a lower plate 22 of the shutter 12 are integrally injection-moulded. The shutter 12 consists of a thermoplastics synthetic resin, for example, polyoxymethylene resin having an excellent flexibility, low frictional resistance and relatively high strength. The shutter 12 has a U-shaped cross-section and in the state where it is removed from the casing, as shown in Figures 2C and 3, the upper and lower plates 21 and 22 closely approach or abut at the open or free ends of the front and side surfaces.

The elongated holes 14 and 15 are formed in the upper and lower plates 21 and 22. The lower plate 22 is formed with, for example, two rectangular cut-outs or notches 24 and 25. Guide projections 26 and 27 are formed along the inner peripheries of the notches 24 and 25 so as to face the side plate 23. A spring stop projection 28 is formed to protrude inwardly from the side plate 23. Corners of the outer surfaces of peripheral portions 29 and 30 at the periphery of the shutter 12 are cut away or tapered at least on the side of the open end thereof.

The shutter 12 is attached to the casing by springing the open end apart, so that the casing can be inserted from the open end. In this state, the shutter 12 sandwiches the casing in a manner such that the inner surfaces of the upper and lower plates 21 and 22 closely embrace the surfaces of the upper and lower shells 1 and 2. A spring is interposed between the inside of the side plate 23 of the shutter 12 and the edge surface of the casing. The elongated holes 8 and 9 are opened or closed in association with the sliding of the shutter 12 along the recesses 10 and 11 of the upper and lower shells 1 and 2. In the non-operating state of the magnetic disc cassette, the elongated holes 8 and 9 are closed by the upper and lower plates 21 and 22 of the shutter 12 due to the tension of the spring interposed between the shutter 12 and the cassette casing, so that the magnetic disc 3 is covered by the shutter 12.

As described above, the upper and lower plates 21 and 22 of the shutter 12 closely approach as they approach the peripheries of the open end of the shutter. Consequently, the inner surfaces of the upper and lower plates 21 and 22 uniformly engage the bottom surfaces of the recesses 10 and 11 of the upper and lower shells 1 and 2.

Figures 4A and 4B show partially enlarged views of the magnetic disc cassette of Figure 1. The projection 27 of the shutter 12 is slidably inserted in the guide groove 13 and the projection 26 is similarly slidably inserted in the guide groove 13 (not shown). One end 32 of a spring 31 is inserted in a recess 33 formed in the cassette casing and is stopped there. The other end 34 of the spring 31 is stopped by means of the projection 28 of the shutter 12.

Figures 4A and 4B show the state in that the shutter 12 is set at the non-operating position by the spring 31. Upon operation, when the magnetic disc cassette is installed in the disc recorder, the shutter 12 is automatically slid against the spring force of the spring 31 by means of the operating section of the disc recorder In association with the sliding operation for Installation of the disc cassette. Then, the positions of the elongated holes 14 and 15 of the shutter 12 and the positions of the elongated holes 8 and 9 of the upper and lower shells 1 and 2 coincide, and the operating state is achieved.

The upper and lower plates 21 and 22 of the shutter 12 could be warped outwardly due to a time-dependent change or the like. If the plates 21 and 22 are warped outwardly, they will not uniformly and closely embrace the recesses 10 and 11 when the shutter 12 is attached to the casing, so that the peripheries of the shutter 12 will be spaced from the recesses 10 and 11. In this state, if one tries to insert the magnetic disc cassette into the disc recorder, the floating peripheries and the regulating portions of the inserting port of the disc recorder come into contact, so that there is a possibility such that the disc cassette cannot be smoothly loaded. However, in this embodiment, the corners of the outer surfaces of the peripheries 29 and 30 on the side of the open end of the shutter 12 are tapered as mentioned before. Therefore, as shown in Figure 5, even if the edges of regulating portions 35 and 36 of the inserting port of the disc recorder come into contact with the peripheries 29 and 30, the disc cassette can be smoothly loaded.

The shutter 12 is, for example, injection-moulded with a synthetic resin by injection from a gate into a space which is formed by means of two metal moulds comprising a core and a cavity.

As illustrated in Figures 6 to 11, the metal moulds for this purpose comprise a core 42 and a cavity 44 to form the overall shape of the shutter 12; slide cores 51 and 52 respectively to form the elongated head access holes 14 and 15 of the shutter 12; a slide core 55 to form the projection 26 of the shutter 12; and a slide core 56 to form the projections 27 and 28 of the shutter 12.

The notch 24 corresponding to the position of the slide core 55 is provided to form the projection 26 in the shutter 12. The notch 25 corresponding to the position of the slide core 56 is provided to form the projections 27 and 28 in the shutter 12. The projection 27 is formed in contact relation with the periphery of the notch 25. The projection 28 protrudes from the side plate 23 inwardly into the inner space corresponding to the position of the notch 25. Therefore, both of the projections 27 and 28 can be formed by means of the single slide core 56.

Figures 6A and 6B are a front view and a side elevational view of the metal moulds used to mould the shutter 12. Figure 7 is a cross-sectional view taken along the line 7-7' in Figure 6. Figure 8 is a cross-sectional view taken along the line 8-8' in Figure 6. Figure 9 is a cross-sectional view taken along the line 9-9' in Figure 6. The core 42 arranged to be inserted into the cavity 44 has a protuberant portion 41 having a similar shape to the inner space that is defined by the upper, lower and side plates 21 to 23 of the shutter 12. At the top of the cavity 44, a gate 58 through which the molten synthetic resin is injected into the metal moulds is formed.

As shown in Figure 9, concave portions 45 and 46 into which the edges of the slide cores 55 and 56 are inserted are formed at the edge surface of the protruberant portion 41 of the core 42. As shown in Figure 7, the concave portion 45 has a depth which is equal to the width of the protuberant portion 41. As shown in Figure 8, the concave portion 46 has a depth extending to the position where the projection 28 is formed. Step portions 47 and 48 are formed at the bottom surfaces of the concave portions 45 and 46. The step portions 47 and 48 have shapes corresponding to the projections 26 and 27, respectively.

Slide core inserting ports 49 and 50 having shapes corresponding to the elongated holes 14 and 15 of the shutter 12 are formed in the front and back surfaces of the cavity 44. The slide cores 51 and 52 are slid through the inserting ports 49 and 50. As shown in Figures 7 and 8, slide core inserting ports 53 and 54 into which the rod-shaped slide cores 55 and 56 are respectively inserted are formed in the front portion of the cavity 44. The positions of the slide cores 55 and 56 correspond to the notches 24 and 25 of the shutter 12. As shown in Figure 8, a step portion 57 of a shape corresponding to the projection 28 of the shutter 12 is formed at the edge of the protuberant portion 41 of the core 42 in contact with the edge of the slide core 56.

Molten polyoxymethylene resin, for example, is injected from the gate 58 into the foregoing metal moulds and this resin flows into the gap between the cavity 44 and the core 42 into which the slide cores 51, 52, 55 and 56 have been inserted. The resin is then cooled and solidified in the metal moulds. In this case, the surface temperatures of the metal moulds are set such that the surface temperature of the cavity 44 becomes lower than that of the core 42. Consequently, the solidification starts from the resin around the cavity 44.

After the fluid resin has been cooled and solidified in the metal moulds, as shown in Figure 10, the slide cores 51, 52, 55 and 56 are slid out laterally by only predetermined distances, so that the metal moulds consisting of the core 42 and the cavity 44 are separated as shown in Figure 11. The shutter 12 of the shape as shown in Figure 2 is thus produced. Eventually, by allowing the fluid resin to flow into the gap between the cavity 44 and core 42, the upper, lower and side plates 21 and 23 are formed.

As shown in Figures 6a and 6B, since the slide cores 51 and 52 have been inserted into the cavity 44, no resin flows into these portions, so that the elongated holes 14 and 15 are formed. Also, since the slide cores 55 and 56 have been inserted into the core 44, no resin flows into these portions, so that the notches 24 and 25 are formed. Since the step portion 47 has been formed in the concave portion 45 at the edge of the protuberant portion of the core 42, the gap is formed due to the step portion 47 in the portion where the core 42 and the slide core 55 come into contact and the resin flows into this gap, so that the projection 26 is formed.

As shown in Figures 7 to 9, since the step portion 48 has been formed in the concave portion 46 at the edge of the protuberant portion 41 of the core 42, the gap is formed due to the step portion 48 in the portion where the core 42 and the slide core 56 come into contact and the resin flows into this gap, so that the projection 27 is formed. At the same time, since the step portion 57 has been formed at the edge of the protuberant portion 41, the resin flows into the step portion 57, so that the projection 28 is formed.

As described above, the surface temperatures of the metal moulds are controlled such that the surface temperature of the cavity 44 is lower than that of the core 42, so that the resin near the portion which is in contact with the surface of the cavity 44 is solidified sooner than the resin near the portion which is in contact with the surface of the core 42. Therefore, the volume of the resin near the core 42 is reduced after the reduction of the volume of the resin near the cavity 44. This distortion is released after the shutter has been taken out from the metal moulds, and this causes the shutter 12 to be warped inwardly such that the open end of the shutter becomes narrow as shown in Figures 2C and 3.

The present invention is not limited to a shutter as in the foregoing embodiment in which the slide cores 55 and 56 are inserted from the front side and thereby to form the notches 24 and 25, but the invention can be applied to a shutter in which the slide cores are inserted from both sides and the notches 24 and 25 are not formed. Figures 12 to 17 illustrate metal moulds for integrally moulding a shutter without producing the notches 24 and 25.

These metal moulds comprise a core 61 and a cavity 63; slide cores 69 and 70 respectively to form the elongated holes 14 and 15 of the shutter; and slide cores 73 and 74 to form the projections 26 to 28 of the shutter.

Figures 12A and 12B are a front view and a side elevational view of the metal moulds. Figure 13 is a cross-sectional view taken along the line 13-13' in Figure 12. Figure 14 is a cross-sectional view taken along the line 14-14' in Figure 12. Figure 15 is a cross-sectional view taken along the line 15-15' in Figure 12. The overall shape of the shutter is formed by the cavity 63 and the core 61 having a protuberant portion 62 arranged to be inserted into the cavity 63.

Step portions 65 and 66 having shapes corresponding to the projections 26 and 27 of the shutter are formed at the edge of the protuberant portion 62 of the core 61. In addition, a projection 71 is formed at the edge of the protuberant portion 61. A groove 72 having a width which is substantially equal to the thickness of the projection 28 of the shutter is formed in the projection 71.

The core 61 is inserted into the cavity 63. Four slide core inserting ports are formed in the cavity 63. The slide cores 69 and 70 are respectively inserted into the slide core inserting ports. The shapes of the edges of the slide cores 69 and 70 correspond to the elongated holes 14 and 15 of the shutter. The slide cores 73 and 74 are respectively inserted through those ports. A projection 76 is formed at the edge of the other slide core 74.

Similarly to the example of the foregoing metal moulds, the fluid resin is injected from a gate 75. The injected resin flows into the gap in the metal moulds and is solidified. The slide cores 69 and 70 are slid by only predetermined distances as shown in Figure 16. The slide cores 73 and 74 are likewise slid as shown in Figure 17. The core 61 is pulled out from the cavity 63, so that the core 61 and the cavity 63 are separated as shown in Figure 18.

The resin flows from the gate 75 into the gap between the core 61 and the cavity 63, so that the upper, lower and side plates 21, 22 and 23 of the shutter are formed. Since the slide cores 69 and 70 have been inserted into this gap, no resin flows into these portions, so that the elongated holes 14 end 15 are formed. Since gaps are formed by the step portions 65 and 66 in the contacting surfaces along the edge surface of the protuberant portion 62 of the core 61 and the slide cores 73, and 74, by allowing the resin to flow into these gaps, the projections 26 and 27 are respectively formed. The resin flows into the gap formed by the groove 72 formed in the projection 71 of the protuberant portion 62 and the projection 76 formed on the slide core 74, so that the projection 28 is formed.

By controlling the surface temperatures of the core 61 and cavity 63 when the synthetic resin is solidified in a similar manner as above; when the shutter is removed from the casing of the disc cassette, the peripheries of the upper and lower plates 21 and 22 of the shutter are warped inwardly.

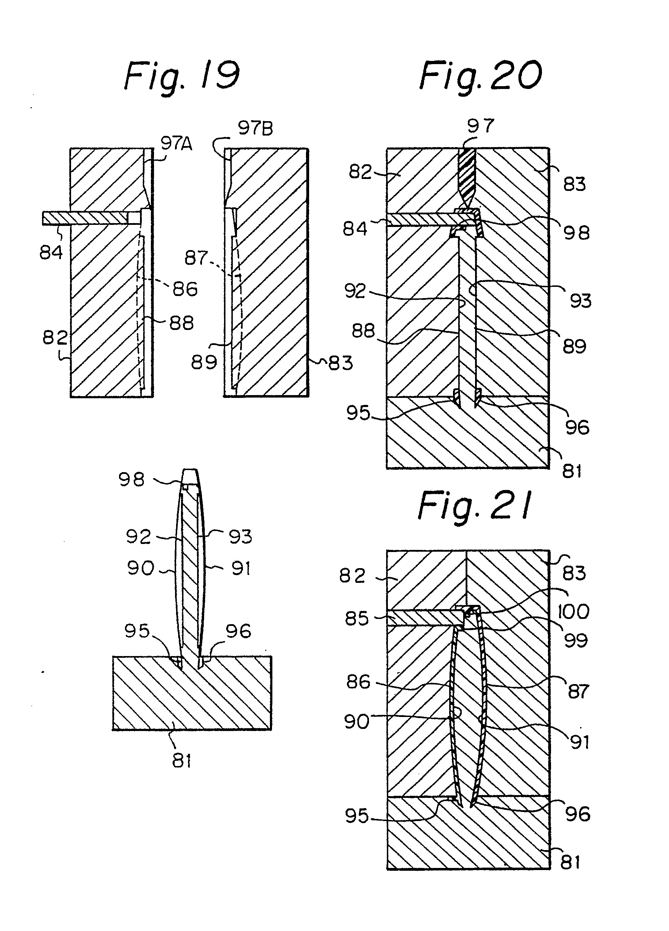

Another example of the moulding process of the shutter will now be described. As shown in Figures 19 to 21, the metal moulds for injection molding in this case comprise a core 81 and cavities 82 and 83 to form the overall shape of the shutter 12; a slide core 84 to form the projection 26 of the shutter 12; and a slide core 85 to form the projections 27 and 28 of the shutter 12.

The notch 24 corresponding to the position of the slide core 84 is produced to form the projection 26 in the shutter 12. The notch 25 corresponding to the position of the slide core 85 is produced to form the projections 27 and 28 in the shutter 12. The projection 27 is formed in contact with the periphery of the notch 25. The projection 28 protrudes from the side plate 23 into the inner space corresponding to the position of the notch 25. Therefore, both of the two projections 27 and 28 can be formed by means of the single slide core 85. On the other hand, to form the elongated holes 14 and 15 of the shutter 12, convex portions 88 and 89 having shapes corresponding to the elongated holes 14 and 15 are formed in the cavities 82 and 83, while concave portions 92 and 93 having shapes corresponding to the convex portions 88 and 89 are formed in the core 81.

The slide cores 84 and 85 are inserted into the cavity 82 and the cavities 82 and 83 are brought into engagement with the core 81. A gate 97 is formed in the metal moulds constituted in this way by means of grooves 97A and 97B of the cavities 82 and 83. In addition, a gap is formed by concave portions 86 and 87 of the cavities 82 and 83, convex portions 90 and 91 of the core 81, and grooves 95 and 96 of the core 81. This gap corresponds to the external shape of the shutter 12. Moreover, a gap of a shape corresponding to the projection 26 of the shutter 12 is formed by the slide core 84 and a step portion 98 of the core 81. Gaps of shapes corresponding to the projections 27 and 28 of the shutter 12 are formed by the slide core 85 and step portions 99 and 100 of the core 81. The molten synthetic resin is injected from the gate 97 of the metal moulds and this synthetic resin flows into the gaps in the metal moulds. This resin is cooled in the metal moulds and is solidified to have the shape corresponding to the gaps in the metal moulds.

The gap in the metal moulds formed by the concave portions 86 and 87 of the cavities 82 and 83, convex portions 90 and 91 of the core 81, and grooves 95 and 96 of the core 81 conforms with the external shape of the shutter 12. Consequently, as shown in Figures 2A to 2C and 3, the shutter 12 of the shape having a U-shaped cross-section in which the upper and lower plates 21 and 22 closely approach at the open end of the shutter, is moulded by the above-mentioned gap.

On the other hand, as shown in Figure 20, the convex portions 88 and 89 of the cavities 82 and 83 and the concave portions 92 and 93 of the core 81 form the portions in the metal moulds which no synthetic resin flows into. The elongated holes 14 and 15 of the shutter 12 are formed in correspondence to these portions. Moreover, the gap which is formed by the slide core 84 and step portion 98 of the core 81 corresponds to the projection 26 of the shutter 12 as shown in Figure 20. Therefore, the projection 26 is formed by this gap. In addition, the gaps which are formed by the slide core 85 and the step portions 99 and 100 of the core 81 correspond to the projections 27 and 28 of the shutter 12 as shown in Figure 21. Therefore, the projections 27 and 28 are formed by these gaps. By inserting the slide cores 84 and 85, the portions in the metal moulds where no synthetic resin flows into are formed. The notches 24 and 25 are formed in the shutter 12 by these portions.

As described, the shutter is injection-moulded from a synthetic resin; therefore, the manufacturing processes can be simplified and the manufacturing costs can be made low. Also, since the shutter is moulded from a synthetic resin, when the shutter is mounted on the casing or when the shutter is slid along the casing, the casing is not scraped by the shutter and therefore entry into the casing of dust which is produced by the scraping is prevented. The peripheries of the upper and lower plates of the shutter are warped inwardly such that these plates closely approach as they approach the non-coupling portion, so that the head inserting port of the casing and the pad inserting port can be completely closed by the shutter. Moreover, since the corners of the peripheries of the shutter at its open end are tapered, the magnetic disc cassette can be smoothly loaded into the disc recorder.

## Claims

1. A magnetic disc cassette comprising:
   a magnetic disc (3);
   a casing (1, 2) housing said magnetic disc (3); and
   a U-shaped, synthetic resin shutter (12) which is slidably provided on said casing (1, 2) and can be set to either an operating position or a non-operating position;
   wherein said shutter (12) comprises an upper plate (21), a lower plate (22), a side plate (23) which couples said upper and lower plates (21, 22), and an opening (14, 15) formed in at least one of said upper and lower plates (21, 22) for insertion of a head;
   characterised in that:
   said upper plate (21), said lower plate (22) and said side plate (23), and including said opening (14, 15), of the shutter (12) are integrally moulded to have the U-shaped cross-section and thereby to sandwich said casing (1, 2); and
   when said shutter (12) is removed from said casing (1, 2) the free ends of said upper and lower plates (21, 22) closely approach or abut each other.

2. A magnetic disc cassette according to claim 1 wherein a projection (27) arranged to be inserted into a groove (13) formed in said casing (1, 2) is formed on one of said upper and lower plates (21, 22) of said shutter (12).

3. A method of making a shutter (12) for a magnetic disc cassette according to claim 1 or claim 2 wherein said shutter (12) is moulded by means of a first metal mould (42) arranged to define the internal space which is formed by said upper, lower and side plates (21, 22, 23) of said shutter (12) and a second metal mould (51, 52) arranged to be brought into position relative to said first metal mould (42), and wherein the cooling conditions for said first and second metal moulds (42, 51, 52) are made different, whereby when said shutter (12) is removed from said first and second moulds (42, 51, 52), the free ends of said upper and lower plates (21, 22) closely approach or abut each other.

## Revendications

1. Cassette de disque magnétique comportant:
   un disque magnétique (3);
   un boîtier (1,2) logeant ledit disque magnétique (3), et
   un obturateur (12) en forme de U, en résine synthétique, qui est monté, avec liberté de coulissement, sur ledit boîtier (1,2) et peut se placer soit à une position opérationnelle soit à une position non opérationnelle;
   étant précisé que ledit obturateur (12) comporte une portion plate supérieure (21), une portion plate inférieure (22), une portion plate latérale (23) qui réunit lesdites portions plates supérieure et inférieure (21,22) et une ouverture (14,15) formée dans au moins l'une desdites portions plates supérieure et inférieure (21,22) pour insertion d'une tête;
   caractérisée par le fait que:
   ladite portion plate supérieure (21), ladite portion plate inférieure (22) et ladite portion plate latérale (23), y compris ladite ouverture (14,15), de l'obturateur (12) sont moulées d'une seule pièce pour prendre la section droite en forme de U et, de ce fait, prendre en sandwich ledit boîtier (1,2); et
   si l'on enlève dudit boîtier (1,2) ledit obturateur (12), les extrémités desdites portions plates supérieure et inférieure (21,22) s'approchent étroitement l'une de l'autre, ou butent l'une contre l'autre.

2. Cassette de disque magnétique selon la revendication 1, dans laquelle une saillie (27), prévue pour venir s'insérer dans une rainure (13) formée dans ledit boîtier (1,2) est formée sur l'une des portions plates supérieure et inférieure (21,22) dudit obturateur (12).

3. Procédé de fabrication d'un obturateur (12) pour une cassette de disque magnétique selon la revendication 1 ou la revendication 2, dans lequel on moule ledit obturateur (12) au moyen d'un premier moule métallique (42) disposé pour définir l'espace intérieur formé par lesdites portions plates supérieure, inférieure et latérale (21,22,23) dudit obturateur (12), un second moule métallique (51,52) étant disposé pour être mis en position par rapport audit premier moule métallique (42), et dans lequel les conditions de refroidissement pour ledit premier et ledit second moules métalliques (42,51,52) sont rendues différentes, ce par quoi, lorsque l'on sort dudit premier et dudit second moules (542,51,52) ledit obturateur (12), les extrémités libres desdites portions plates supérieure et inférieure (21,22) s'approchent étroitement l'une de l'autre ou butent l'une contre l'autre.

## Ansprüche

1. Magnetplattenkassette mit

einer Magnetplatte (3),

einem diese Magnetplatte (3) umschließenden Gehäuse (1, 2)

und einem U-förmigen Verschlußteil (12) aus Kunstharz, das gleitbar an dem Gehäuse (1, 2) angeordnet ist und das entweder in eine Arbeitsposition oder in eine Ruheposition gebracht werden kann,

wobei dieses Verschlußteil (12) eine obere Platte (12), eine untere Platte (22), eine die obere und die untere Platte (21, 22) verbindende Seitenplatte (23) sowie eine in der oberen Platte (21) oder in der unteren Platte (22) oder sowohl in der oberen als auch in der unteren Platte ausgebildete Öffnung (14, 15) für das Einführen eines Kopfes aufweist,

dadurch gekennzeichnet,

daß die obere Platte (21), die untere Platte (22) und die Seitenplatte (23) einschließlich der genannten Öffnung (14, 25) des Verschlußteils (12) einstückig so geformt sind, daß sie einen U-förmigen Querschnitt haben und dadurch das Gehäuse (1, 2) sandwichartig umschließen,

und daß die freien Enden der oberen und der unteren Platte (21, 22) sich eng aneinander annähern oder aneinander zu Anlage kommen, wenn das Verschlußteil (12) von dem Gehäuse (1, 2) entfernt wird.

2. Magnetplattenkassette nach Anspruch 1, bei der an der oberen oder an der unteren Platte (21, 22) des Verschlußteils (12) ein Vorsprung (27) ausgebildet ist, der so angeordnet ist, daß er in eine an dem Gehäuse (1, 2) ausgebildete Nut (13) eingreift.

3. Verfahren zur Herstellung eines Verschlußteils (12) für eine Magnetplattenkassette nach Anspruch 1 oder 2,

bei dem das Verschlußteil (12) mit Hife einer ersten Metallform (42) geformt wird, die den von der oberen Platte (21), der unteren Platte (22) und der Seitenplatte (23) des Verschlußteils (12) gebildeten Innenraum bestimmt, sowie mit Hilfe einer zweiten Metallform (51, 52), die in eine relative Position zu der ersten Metallform (42) gebracht werden kann,

und bei dem die Kühlbedingungen für die erste und die zweite Metallform (42, 51, 52) derart unterschiedlich gestaltet werden, daß dann, wenn das Verschlußteil (12) aus der ersten und der zweiten Metallform (42, 51, 52) entfernt wird, die freien Enden der oberen und der unteren Platte (21, 22) sich eng aneinander annähern oder aneinander zu Anlage kommen.

Fig. 1A

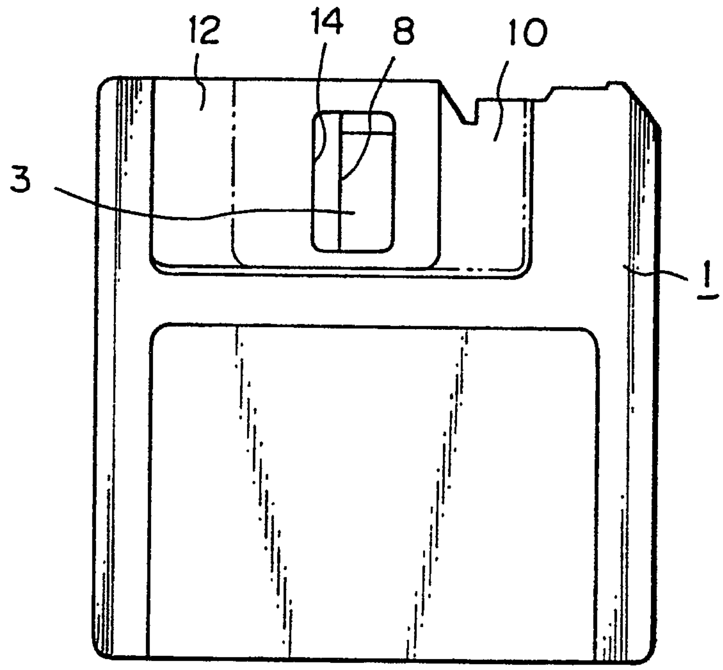


Fig. 1B

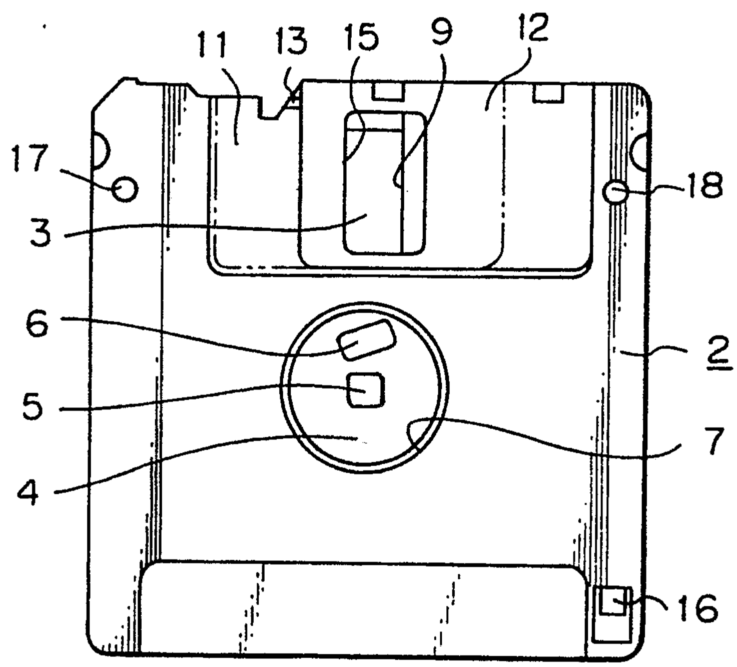

Fig. 2A

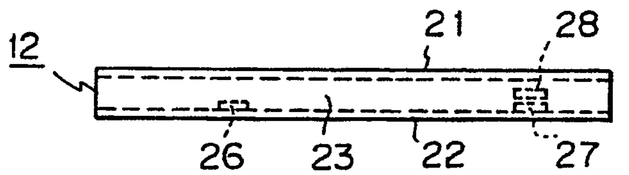


Fig. 2B

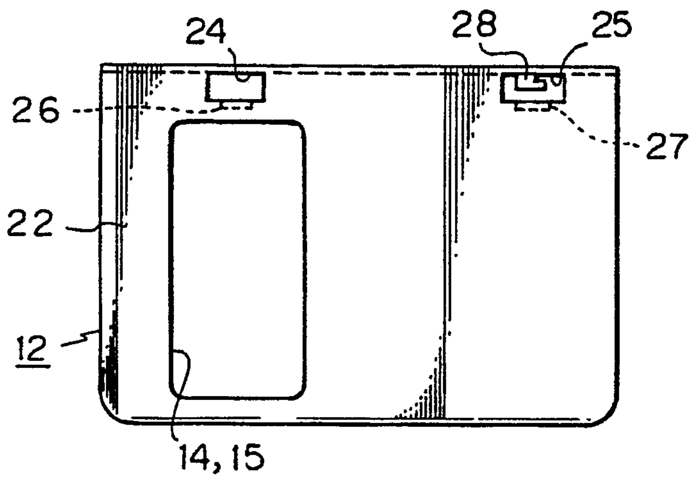


Fig. 2C

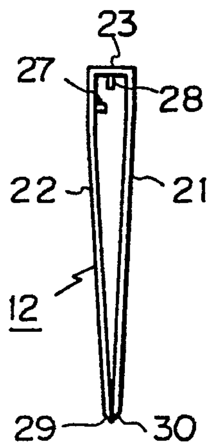


Fig. 3

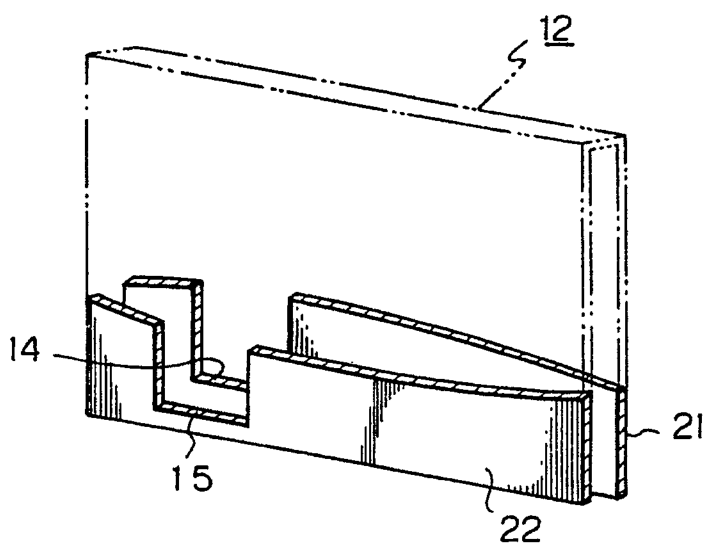

Fig. 4A

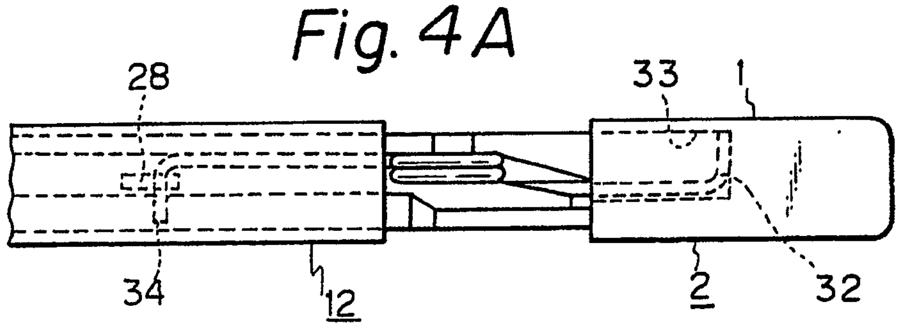


Fig. 4B

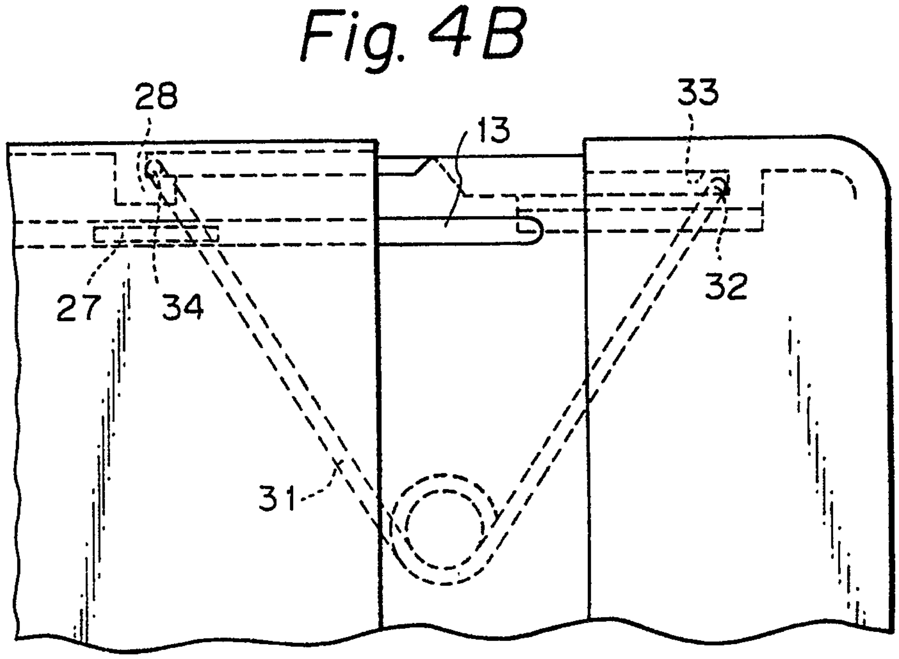


Fig. 5

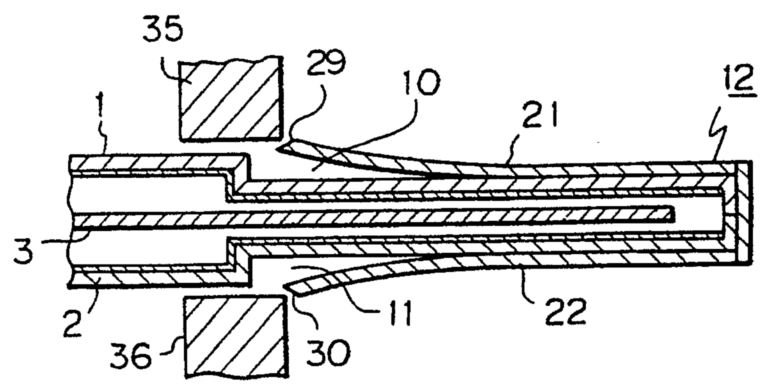

Fig. 6A

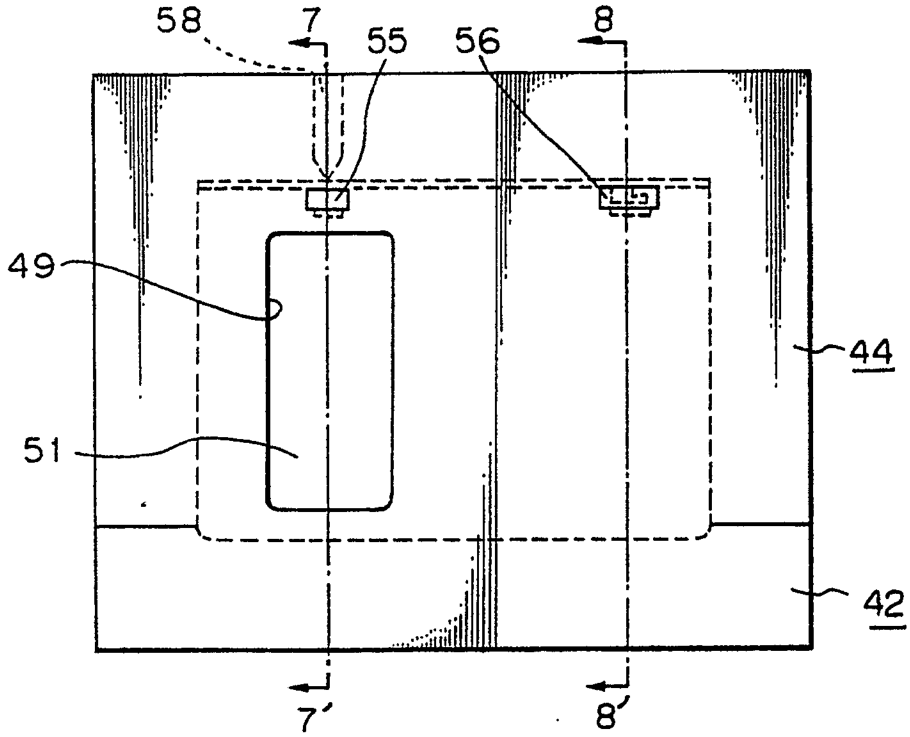


Fig. 6B

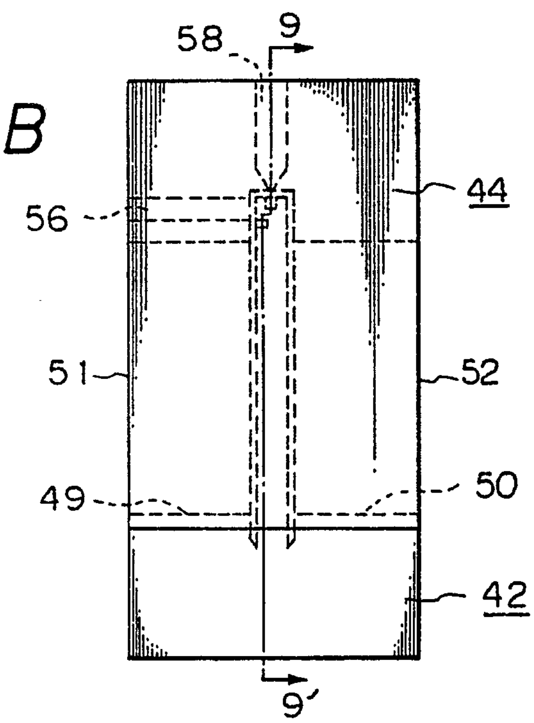

Fig. 7

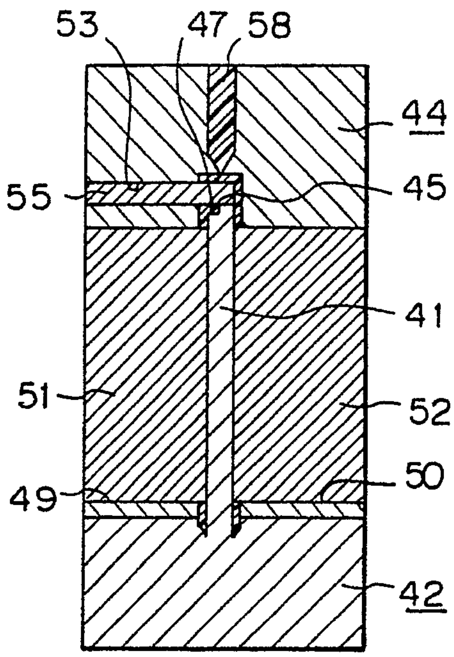


Fig. 8

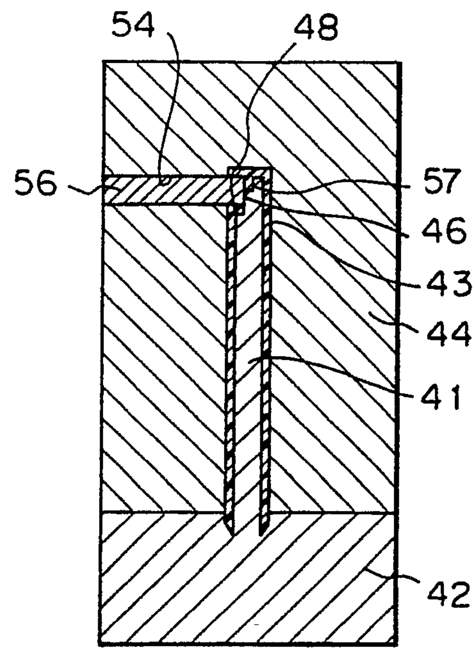


Fig. 9

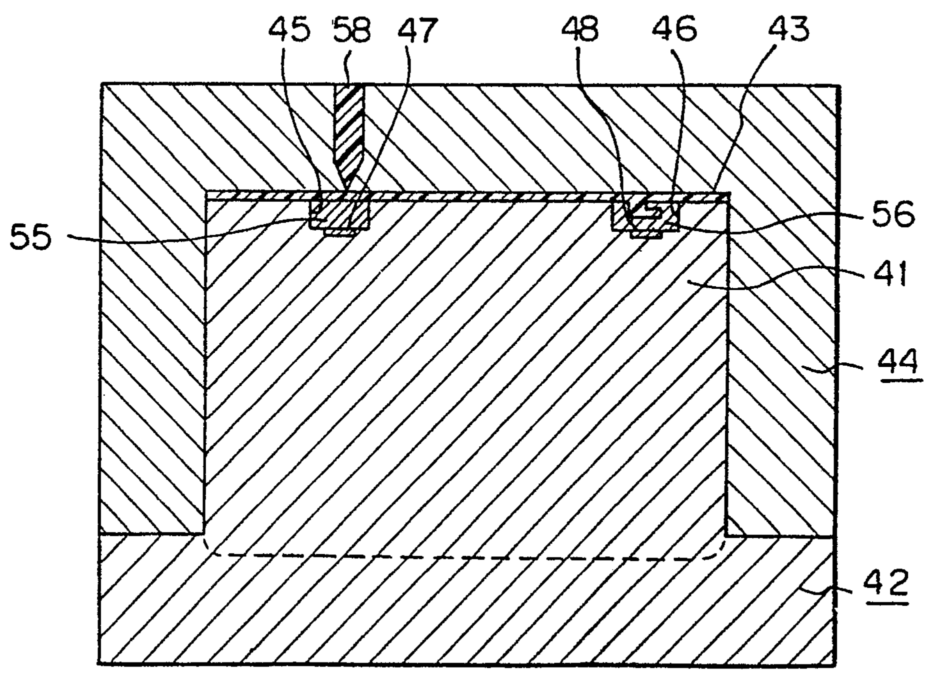

Fig. 10

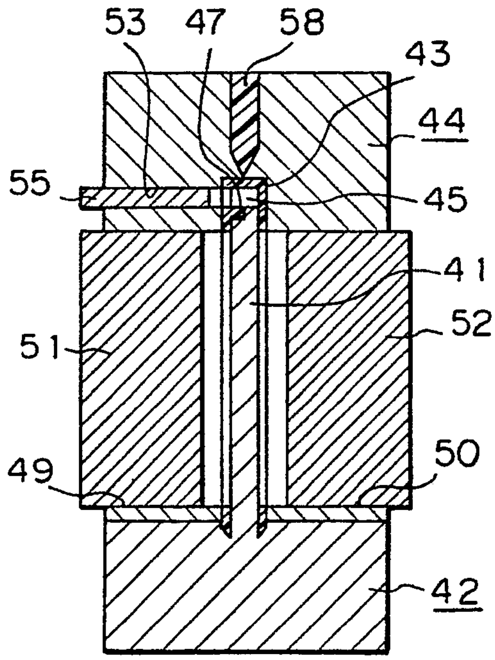
53
47
58
43
44
55
45
41
51
52
49
50
42

Fig. 11

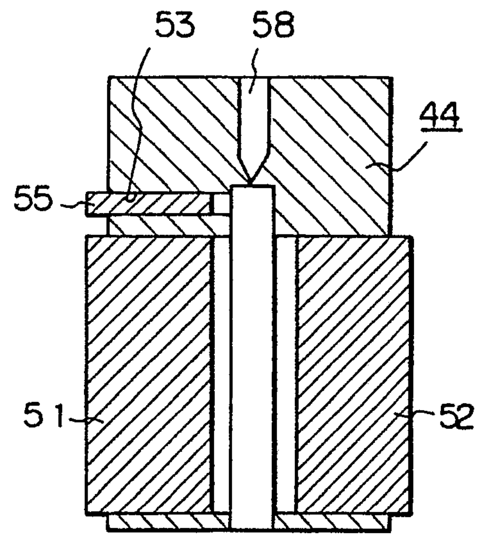
53
58
44
55
51
52

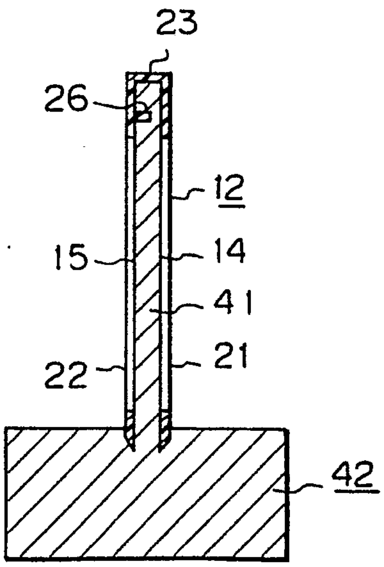
23
26
12
15
14
41
22
21
42

Fig. 12 A

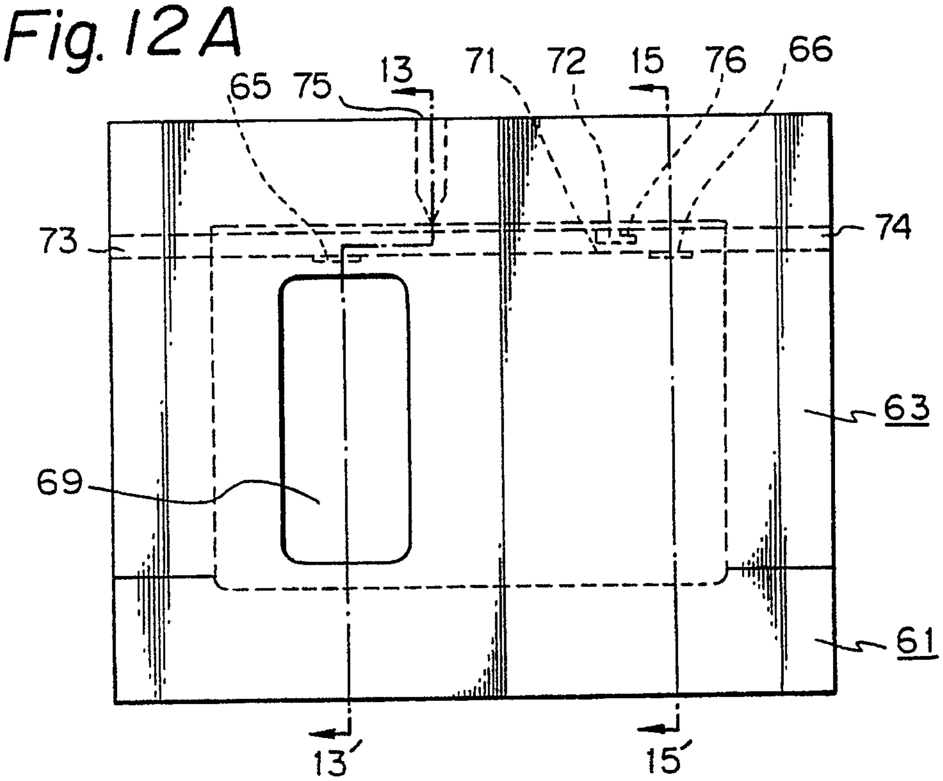


Fig. 12 B

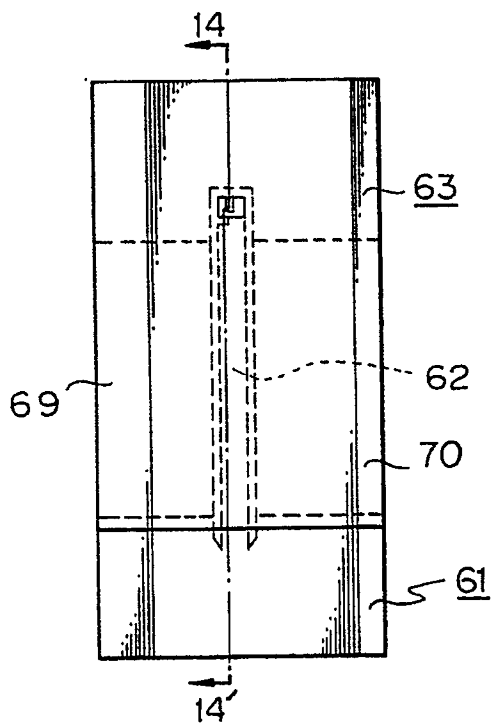

Fig. 13

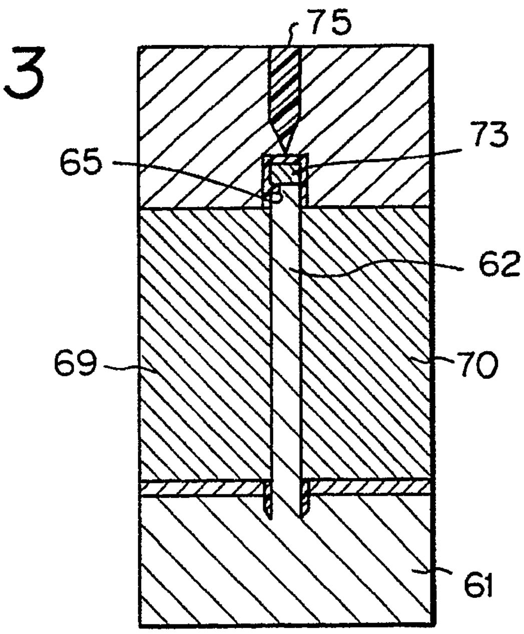


Fig. 14

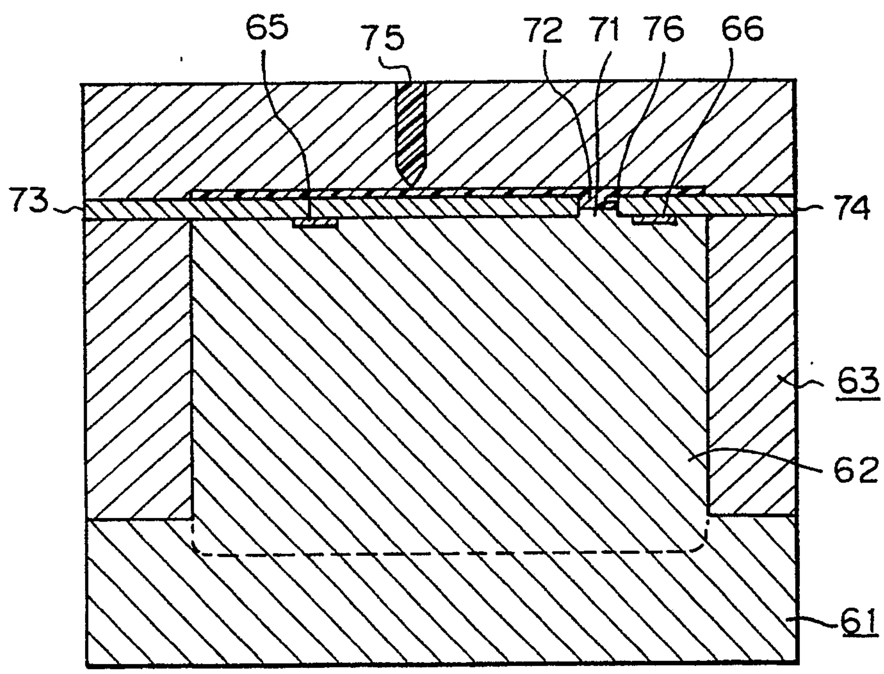

Fig.15

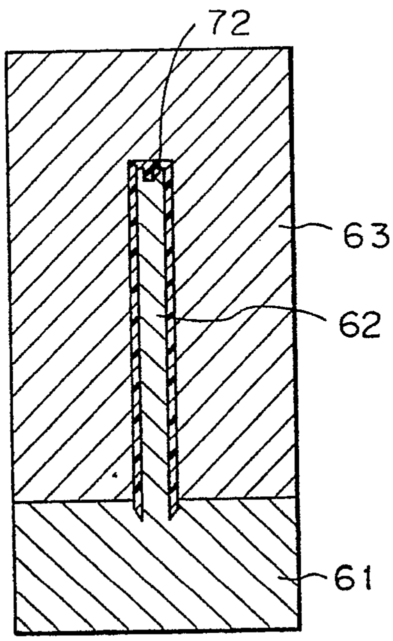


Fig.16

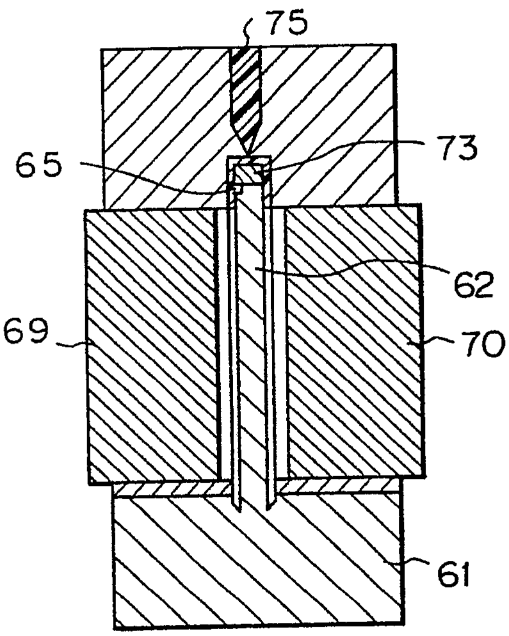


Fig.17

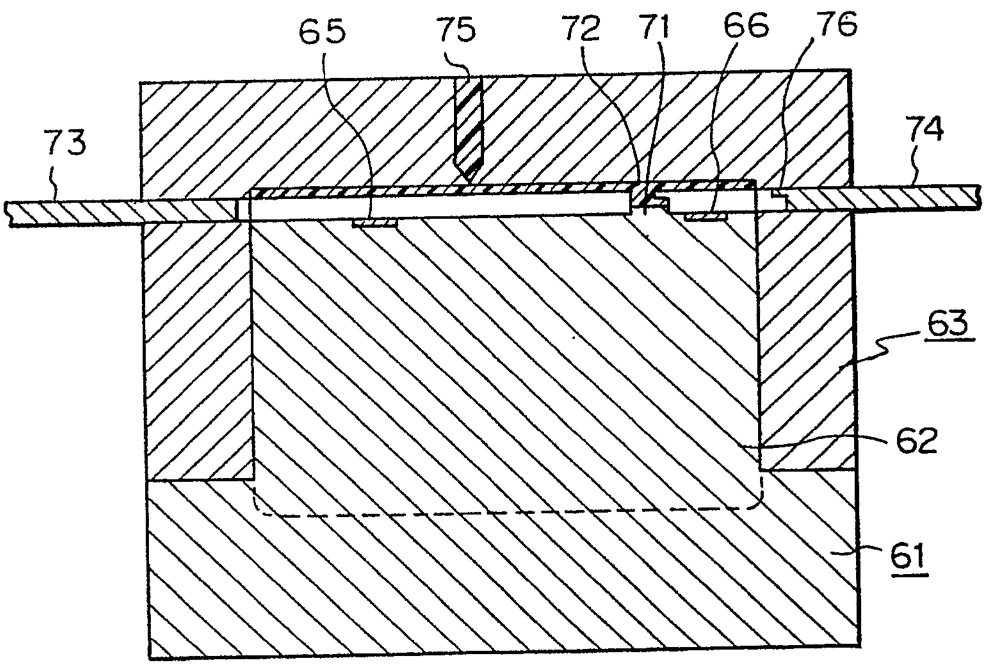

Fig. 18

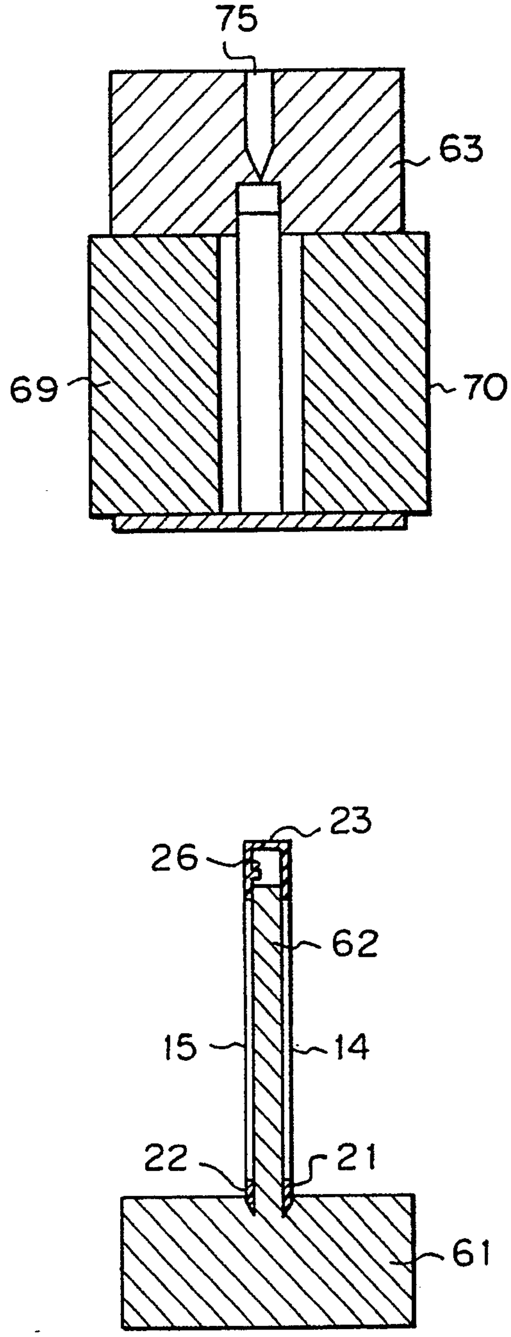

Fig. 19

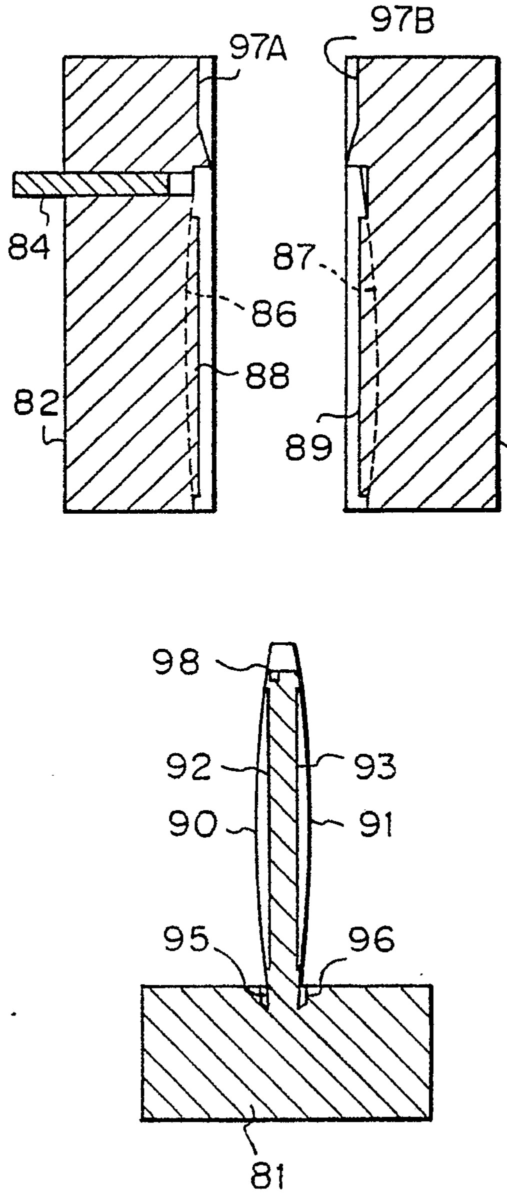


Fig. 20

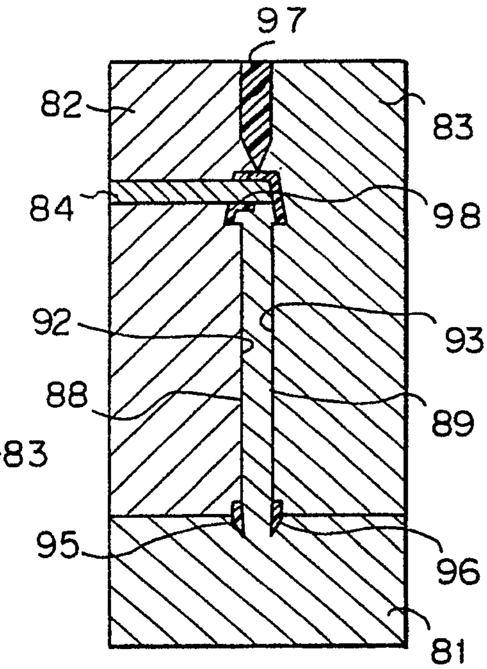


Fig. 21